# FASCICULE DE BREVET EUROPEEN

(11) **EP 0 559 524 B1**
(45) Date de publication et mention de la délivrance du brevet: **18.09.1996**
(21) Numéro de dépôt: 93400479.7
(22) Date de dépôt: 25.02.1993
(51) Int. Cl.: G01N 21/89

(54) **Procédé et dispositif de contrôle de la transparence d'un vitrage feuilleté**
Verfahren und Vorrichtung zur Prüfung der Durchsichtigkeit einer Verbundsscheibe
Method and device for monitoring the transparency of a laminated glass sheet

(30) Priorité: 03.03.1992 FR 9202485
(43) Date de publication de la demande: 08.09.1993
(73) Titulaire: SAINT-GOBAIN VITRAGE, F-92400 Courbevoie (FR)
(72) Inventeur: Didelot, Claude, F-60150 Thourotte (FR); Parnet, Bernard, F-42600 St Georges Haute Ville (FR)
(74) Mandataire: Le Vaguerèse, Sylvain Jacques

(56) Documents cités:
- EP-A- 0 342 127
- US-A- 3 799 679
- US-A- 4 380 396
- US-A- 4 400 089
- US-A- 4 647 197

## Description

L'invention concerne un procédé et un dispositif de contrôle de la transparence d'un vitrage, en particulier d'un vitrage feuilleté.

Par vitrage feuilleté, on entend selon l'invention un vitrage formé d'au moins deux éléments à savoir au moins une feuille rigide de verre ou en matière plastique et au moins une couche ou feuille souple en matière plastique. Ces vitrages feuilletés peuvent être des vitrages dits symétriques lorsqu'ils comportent deux feuilles rigides notamment en verre en tant que feuilles extérieures. Les vitrages feuilletés peuvent être aussi des vitrages dits asymétriques lorsqu'ils comportent une feuille rigide et une feuille de matière plastique souple en tant que feuilles extérieures.

Ces vitrages feuilletés présentent des propriétés avantageuses, notamment une grande résistance au choc ; ils trouvent une application particulière en tant que vitrage anti-effraction dans le bâtiment par exemple ou en tant que vitrage dans les véhicules de transport (automobiles, avions, trains...).

Un vitrage feuilleté possède une transparence déterminée selon son application. Dans le cas d'un vitrage automobile, la transmission lumineuse doit être supérieure à 70 %, cette valeur devant en outre se conserver dans le temps. Des procédés de contrôle de la transparence s'avèrent donc obligatoires.

Lorsqu'il s'agit de vitrages feuilletés, l'obtention et la conservation de la qualité optique sont liées à la qualité du procédé d'assemblage.

Ce procédé d'assemblage se décompose, généralement, en deux étapes : un assemblage préliminaire et un assemblage définitif.

Différentes techniques sont utilisées pour procéder à l'assemblage préliminaire.

L'une de ces techniques est la technique dite de "calandrage" : les différents éléments destinés à former un vitrage feuilleté, superposés les uns aux autres selon la disposition voulue, sont chauffés et sont soumis à une pression exercée par les rouleaux de la calandreuse. L'action conjuguée du chauffage et de la pression provoque une adhésion entre les différents éléments, qui se trouvent ainsi assemblés les uns aux autres.

Une autre technique est une technique utilisant l'action conjuguée du vide et du chauffage afin de provoquer une adhésion entre les différents éléments constituant un vitrage feuilleté. Ces éléments, superposés selon la disposition voulue, sont introduits dans une poche ou sac hermétique. Cette poche est chauffée et est soumise à un vide, provoquant l'adhésion entre les différents éléments. L'ensemble feuilleté est ensuite retiré de la poche.

L'assemblage définitif est généralement réalisé dans un autoclave où l'ensemble feuilleté préassemblé est soumis à l'action simultanée de la température et de la pression.

C'est à la suite de cet assemblage définitif que le vitrage acquiert sa transparence finale.

Il a été constaté sur certains vitrages une opacification croissante au cours du temps, alors que ces mêmes vitrages possédaient une transparence convenable à la sortie de l'opération d'assemblage définitif.

Des recherches ont montré que la transparence du vitrage et son évolution au cours du temps sont fonction des conditions dans lesquelles s'opère l'assemblage préliminaire.

On a ainsi été amené à contrôler l'opération d'assemblage préliminaire afin de limiter les risques de défaillance ultérieure. Ce contrôle peut se faire par une vérification des paramètres intervenant lors de l'opération d'assemblage, en particulier lorsqu'il s'agit d'un assemblage dans une poche ou sac. Ces paramètres sont, notamment, la température, la pression ou le vide. Ce contrôle de paramètres ne suffit cependant pas à s'assurer du bon assemblage préliminaire, d'autres facteurs pouvant intervenir tels un mauvais état de la poche, un pli dans celle-ci entraînant un mauvais vide...

Une autre solution est un contrôle de la transparence du vitrage feuilleté à la sortie de l'opération de préassemblage.

Lorsqu'il s'agit d'un vitrage feuilleté de type classique formé de deux feuilles de verre et d'une feuille intercalaire en polyvinylbutyral (PVB), l'opération d'assemblage préliminaire procure une transparence partielle au vitrage qui, à l'origine, n'est pas transparent du fait de l'état de surface structurée des deux faces de la feuille en PVB, qui doit permettre l'écoulement de l'air entre les feuilles au moment de l'assemblage.

La transparence du vitrage, à ce stade de la fabrication, n'est que partielle et souvent non homogène ; il en résulte une difficulté pour contrôler cette transparence. Une personne peut effectuer un contrôle visuel du vitrage préassemblé, mais ce contrôle reste subjectif et il est coûteux en main d'oeuvre.

La présente invention obvie à ces inconvénients.

La présente invention propose un procédé et un dispositif de contrôle de la transparence d'un vitrage, simple et automatisable et qui, en outre, permet l'obtention de la valeur de transparence en temps réel sur la ligne de production. Ainsi, un vitrage défectueux peut être mis tout de suite hors de la ligne de production. Le dispositif de contrôle peut, en outre, et de préférence, être relié à un moyen capable d'analyser la cause de cette défection et capable d'y remédier immédiatement.

La présente invention concerne donc un procédé de contrôle de la transparence d'au moins une partie de la surface d'un vitrage feuilleté préassemblé par analyse de l'intensité lumineuse de l'image d'une mire vue à travers ladite partie du vitrage.

L'intensité lumineuse, captée par un détecteur, de chaque point de l'image de la mire vue au travers du vitrage est quantifiée par un nombre, les nombres obtenus pour les points d'une même image étant ensuite moyennés. La moyenne obtenue est comparée à une valeur théorique fixée au préalable.

Selon le procédé de l'invention, une mire est éclairée, de préférence par derrière. Un capteur de lumière balaye l'image de la mire vue au travers d'une partie du vitrage et enregistre l'intensité lumineuse issue de chaque point, ou pixel, de cette image. Cette intensité est transformée en signal analogique et quantifiée par un ordinateur, par exemple. Cet ordinateur moyenne ensuite la somme de ces signaux analogiques quantifiés. Avantageusement, il compare cette somme à une valeur théorique limite permettant d'établir la conformité du vitrage.

Ce procédé s'applique avantageusement aux vitrages feuilletés constitués d'au moins une feuille de verre et une feuille de matière plastique dont la transparence évolue au cours de l'opération d'assemblage comprenant elle-même un assemblage préliminaire et un assemblage définitif, comme décrit précédemment dans le cas du PVB. Il permet, en particulier, de mesurer une transparence partielle et non homogène.

Avantageusement, la mire est disposée dans un plan parallèle à celui du vitrage.

La partie du vitrage analysée est, de préférence, la partie du vitrage présentant une relative transparence à la sortie de l'opération de préassemblage. La transparence d'un vitrage feuilleté dépend, notamment, de deux facteurs :
■ la transparence de l'intercalaire en matière plastique qui devient transparent au cours de l'opération d'assemblage,
■ la présence d'air entre les différents éléments constituant le vitrage feuilleté, nuisant à cette transparence.

L'intercalaire devient transparent sous l'action conjuguée du chauffage et d'une pression ou d'un vide. Si un chauffage et une pression peuvent être appliqués de façon quasi homogène sur les surfaces d'un vitrage, en revanche lorsqu'on utilise le vide, celui-ci est généralement plus poussé au centre du vitrage que sur ses bords.

L'air est, de même, chassé principalement par une pression ou aspiré par un vide. Dans le cas d'un vide, celui-ci étant plus poussé au centre, l'air est chassé du centre vers les bords.

Pour ces raisons, le centre du vitrage présente une relative transparence alors que les bords du vitrage présentent une relative non-transparence à la sortie de l'opération de préassemblage utilisant l'action conjuguée du chauffage et du vide.

La partie analysée est donc, de préférence, la partie centrale du vitrage et, avantageusement, elle s'étend au moins sur un tiers du vitrage afin d'augmenter la précision de la mesure. De façon préférée la surface entière du vitrage, excepté les bords, est analysée. Par bords, on entend par exemple lorsqu'il s'agit de pare-brise de véhicules à moteur, une bande périphérique d'une largeur inférieure ou égale à 10 cm environ.

De façon préférée, l'intercalaire est du polyvinylbutyral pour les raisons évoquées précédemment. Par PVB on entend le polyvinylbutyral, généralement plastifié, utilisé dans la fabrication des vitrages feuilletés de bâtiments ou de véhicules à moteur.

L'invention concerne également un procédé de contrôle de l'opération d'assemblage préliminaire, notamment lorsque celle-ci associe le chauffage et le vide afin d'assembler les différents éléments destinés à constituer un vitrage feuilleté. Ce contrôle consiste à analyser l'intensité lumineuse de l'image d'une mire vue à travers au moins une partie du vitrage, cette analyse donnant la valeur de la transparence de cette partie du vitrage.

L'invention concerne aussi un dispositif pour la mise en oeuvre de ce procédé, ce dispositif comportant une mire, une source lumineuse et des moyens de détection et d'analyse d'une intensité lumineuse.

La mire est, avantageusement, constituée d'une succession de bandes parallèles à l'axe de symétrie du vitrage. Ces bandes sont, de préférence, alternativement claires et sombres ; les contrastes nés de cette disposition étant plus facilement détectables.

Le détecteur d'intensité lumineuse est, de préférence, un détecteur à balayage, notamment une caméra à balayage matriciel.

Avantageusement, ce détecteur est couplé à un ordinateur pouvant moyenner les données issues du balayage de l'image de la mire vue à travers le vitrage et la comparer à une valeur théorique.

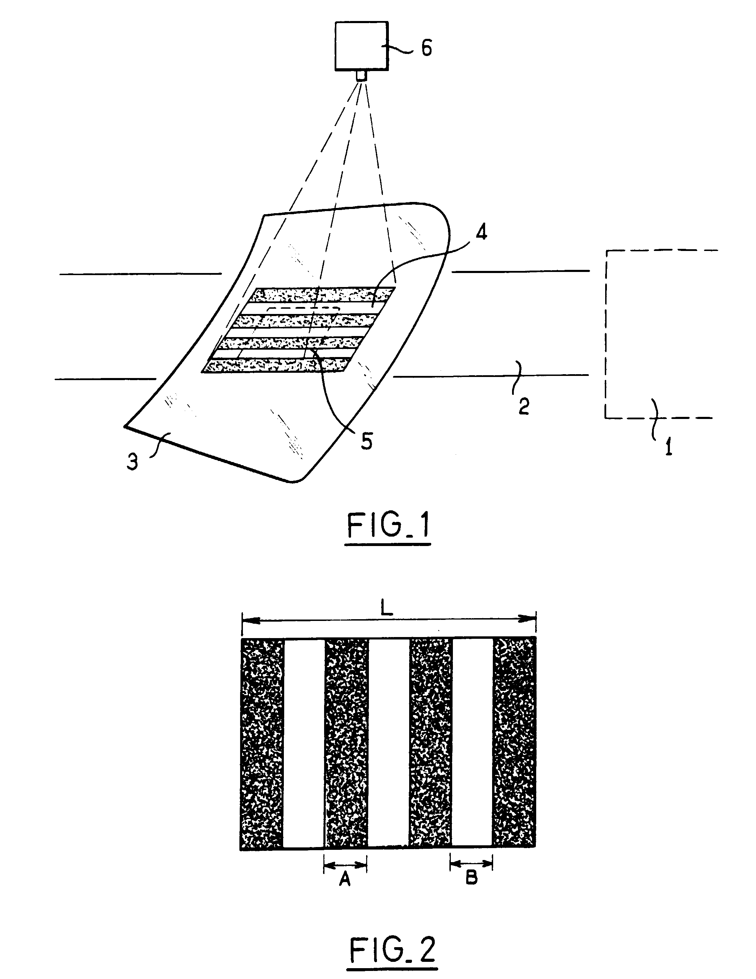

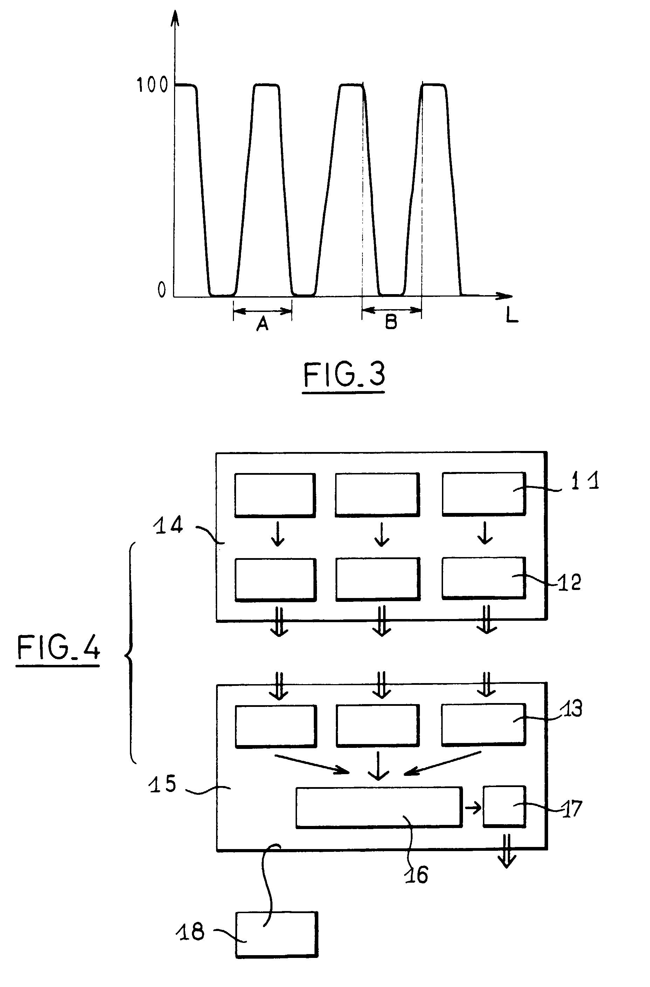

D'autres avantages et caractéristiques de l'invention apparaîtront dans la suite de la description, faite en référence aux figures dans lesquelles :
■ **la figure 1** est une vue, en perspective, d'une partie du dispositif selon la présente invention,
■ **la figure 2** est une vue du dessus du dessin de la mire selon la présente invention,
■ **la figure 3** est un exemple de diagramme obtenu selon le procédé montrant l'image d'une mire vue au travers d'un vitrage sans défaut,
■ **la figure 4** est un schéma du procédé selon la présente invention.

Sur la figure 1, le dispositif où s'effectue l'opération de préassemblage est schématisé par le rectangle 1. Un tapis convoyeur 2 achemine un vitrage préassemblé 3 en sortie du dispositif de préassemblage vers un dispositif de contrôle de sa transparence. Ce dispositif est constitué d'une mire 4 éclairée par une source lumineuse 5. L'intensité lumineuse de l'image de la mire vue au travers du vitrage est détectée par un détecteur à balayage 6 situé au-dessus du vitrage. Les dimensions de la mire visée, par exemple de 40 x 20 cm, correspondent au champ de la caméra disposée à environ 1 mètre au-dessus du pare-brise. Le champ est découpé, par exemple en 592 x 256 points ou pixels, chacun d'eux étant affecté d'un niveau de gris.

Un des dessins possibles de la mire est représenté sur la figure 2. Ce dessin est constitué d'une succession de bandes alternativement sombres A et claires B. Le nombre de ces bandes est fonction de la capacité de résolution du détecteur à balayage ; plus ce nombre est grand, plus la résolution du détecteur à balayage doit être élevée et plus le temps de détection est long. Par ailleurs, un nombre élevé de bandes, donc un nombre élevé de contrastes détectés, conduit à une meilleure précision de la valeur de la transparence du vitrage. Ce nombre est, de préférence, supérieur ou égal à 5. Ce nombre dépend aussi des dimensions de la mire. On considère que des bandes de longueur de 1 à 3 cm donnent entière satisfaction dans le cas du contrôle d'un pare-brise pour véhicule à moteur.

Le détecteur à balayage 6 balaye l'image de la mire, par exemple de gauche à droite, sur toute sa longueur L. Ce détecteur est, de préférence, un détecteur à balayage matriciel encore appelé caméra matricielle. Un tel détecteur permet par un simple balayage de gauche à droite, par exemple, de détecter l'ensemble de la surface de l'image de la mire. Ce type de détecteur est préféré aux détecteurs à balayage linéaire, utilisés usuellement, qui balayent chaque ligne d'une image l'une après l'autre. Dans ce type de détecteur à balayage linéaire, un interstice entre deux lignes analysées est souvent laissé vacant ce qui nuit à la précision de la mesure.

La figure 3 est un exemple d'un signal analogique représentant l'intensité lumineuse d'une image d'une mire vue au travers d'un vitrage sans défaut. Les zones correspondant aux bandes sombres de la mire sont symbolisées par les flèches A et les bandes claires par les flèches B. Les courbes dessinées entre les valeurs 0 et 100 sont les zones de transition détectées entre les zones claires et sombres. L'axe des abscisses correspond à la longueur L de l'image de la mire balayée et l'axe des ordonnées représente les valeurs de l'intensité lumineuse de chaque point ou pixel de l'image de la mire détectée. Sur cet exemple, un blanc lumineux correspond à une intensité lumineuse de 0 et un noir opaque à une intensité de 100.

La figure 4 représente un schéma de l'ensemble des opérations constituant le procédé de détection de l'intensité lumineuse des points ou pixels formant l'image de la mire afin d'obtenir une valeur numérisée de la transparence d'un vitrage. En 11, l'intensité lumineuse de chaque point de l'image de la mire vue au travers d'un vitrage est détectée. Pour des raisons de commodité, seuls trois points ont été représentés, le nombre de rectangles 11 correspondant au nombre de points détectés. Chaque intensité lumineuse détectée est transformée en signal analogique en 12. Ce signal analogique est transmis du détecteur à balayage, symbolisé en 14, vers un ordinateur symbolisé en 15. L'intensité lumineuse peut être quantifiée en 13, par exemple, de 0 à 100, 0 étant la valeur d'un blanc lumineux et 100 la valeur d'un noir opaque. Chaque intensité lumineuse étant différenciée des autres par un nombre qui lui est propre, une grande précision de la mesure est ainsi obtenue.

L'ensemble de ces nombres est ensuite moyenné en 16 ; éventuellement, l'écart-type ou d'autres paramètres statistiques peuvent être calculés, mémorisés et transmis aux personnes intéressées. Cette moyenne obtenue est comparée à une valeur théorique 17, mise en mémoire préalablement, valeur dépendant du type de vitrage analysé, de sa colorimétrie... Si la moyenne est supérieure à cette valeur théorique, le vitrage est dit conforme, sinon il est dit non conforme et mis hors circuit de production. La valeur de la moyenne peut être connue ou non de l'opérateur. En cas de non conformité, l'ordinateur 15 peut être relié à un moyen symbolisé en 18 capable de détecter et de remédier aux anomalies lors de l'opération de préassemblage, engendrant des vitrages non conformes.

Le procédé selon l'invention peut être utilisé pour le contrôle de la transparence de tout type de vitrages feuilletés, en particulier pour les pare-brise des véhicules de transport et, comme décrit précédemment, pour le contrôle de la transparence d'un vitrage feuilleté à la sortie de l'opération d'assemblage préliminaire.

Le procédé peut aussi être utilisé pour le contrôle de la transmission lumineuse à travers tout autre type de vitrage monolithique ou feuilleté.

## Revendications

1. Procédé de contrôle de la transparence d'au moins une partie d'un vitrage feuilleté préassemblé (3) par analyse de l'intensité lumineuse de l'image d'une mire (4) vue à travers ladite partie du vitrage, dans lequel la mire est éclairée par une source lumineuse (5),et l'intensité lumineuse, captée par un détecteur, de chaque point de l'image de la mire vue au travers du vitrage est quantifiée par un nombre, les nombres obtenus pour les points d'une même image étant ensuite moyennés, la moyenne obtenue étant comparée à une valeur théorique fixée au préalable.

2. Procédé de contrôle de la transparence d'un vitrage feuilleté selon la revendication 1, caractérisé en ce qu'il est constitué d'au moins une feuille de verre et une feuille de matière plastique, la transparence de la feuille plastique évoluant au cours de l'opération d'assemblage, comprenant elle-même un préassemblage et un assemblage définitif.

3. Procédé selon l'une des revendications 1 à 2 dans lequel le vitrage est disposé dans un plan parallèle à celui de la mire.

4. Procédé selon une des revendications 1 à 3, caractérisé en ce que l'intensité lumineuse de l'image de la mire vue au travers du vitrage est captée par un détecteur de lumière à balayage.

5. Procédé selon une des revendications 1 à 4, caractérisé en ce que ladite partie contrôlée est la partie centrale du vitrage.

6. Procédé selon la revendication 5, caractérisé en ce que la transparence d'au moins un tiers du vitrage est contrôlée.

7. Procédé selon une des revendications 1 à 6, caractérisé en ce que la partie du vitrage contrôlée est la totalité du vitrage, à l'exception des bords d'une largeur inférieure ou égale à 10 cm.

8. Procédé selon la revendications 7, caractérisé en ce que le vitrage feuilleté est formé d'au moins deux feuilles de verre et d'une feuille intercalaire en polyvinylbutyral.

9. Procédé selon une des revendications 2 à 8, caractérisé en ce que la mire est constituée de bandes alternativement sombres et claires.

10. Procédé de contrôle de l'opération d'assemblage préliminaire d'un vitrage feuilleté notamment lorsque celle-ci associe le chauffage et le vide afin d'assembler les différents éléments constituant ledit vitrage feuilleté, caractérisé en ce que la transparence d'au moins une partie du vitrage préassemblé est contrôlée selon une des revendications 1 à 9.

11. Procédé selon la revendication 10, caractérisé en ce qu'il comporte, en plus des opérations de contrôle, des opérations permettant d'intervenir sur le procédé d'assemblage du vitrage feuilleté.

12. Dispositif de contrôle de la transparence d'un vitrage, caractérisé en ce qu'il comprend une mire (4), une source lumineuse (5), un détecteur de lumière à balayage (6) et des moyens pour analyser l'intensité lumineuse de l'image de la mire au travers du vitrage, pour moyenner cette intensité et la comparer à une valeur théorique.

13. Dispositif selon la revendication 12, caractérisé en ce que le détecteur de lumière à balayage est une caméra matricielle.

14. Dispositif selon une des revendications 12 ou 13, caractérisé en ce que les moyens pour analyser l'intensité lumineuse, la moyenner et la comparer à une valeur théorique comprend un ordinateur.

15. Dispositif selon la revendication 14, caractérisé en ce que le signal analogique de l'intensité lumineuse de chaque point de l'image de la mire vue à travers le vitrage est numérisé.

16. Dispositif selon une des revendications 12 à 15, caractérisé en ce qu'il comprend des moyens pour éclairer la mire par derrière.

17. Dispositif selon une des revendications 12 à 16, caractérisé en ce que la mire est constituée de bandes alternativement sombres et claires.

18. Dispositif selon la revendication 17, caractérisé en ce que la mire est constituée de bandes parallèles selon l'axe de symétrie du vitrage.

19. Dispositif selon l'une des revendications 12 à 18, caractérisé en ce qu'il est relié à des moyens pouvant analyser les anomalies lors de l'opération de préassemblage et y remédier.

## Patentansprüche

1. Verfahren zum Prüfen der Transparenz wenigstens eines Teils einer vormontierten Verbundverglasung (3) durch Messen der Lichtstärke der Abbildung eines durch diesen Teil der Verglasung betrachteten Prüfbildes (4), in welchem das Prüfbild von einer Lichtquelle (5) beleuchtet und die an jedem Punkt der Abbildung des durch die Verglasung betrachteten Prüfbildes von einem Detektor gemessene Lichtstärke durch eine Zahl quantifiziert wird, wobei anschließend die für die Punkte ein und derselben Abbildung erhaltenen Zahlen gemittelt werden und das erhaltene Mittel mit einem zuvor festgelegten theoreti-schen Wert verglichen wird.

2. Verfahren zum Prüfen der Transparenz einer Verbundverglasung nach Anspruch 1, **dadurch gekennzeichnet, daß** sie aus wenigstens einer Glasscheibe und einer Kunststoffolie besteht und sich die Transparenz der Kunststoffolie während des Arbeitsgangs des Verbindens verändert, der seinerseits ein vorläufiges und ein endgültiges Verbinden umfaßt.

3. Verfahren nach Anspruch 1 oder 2, in welchem die Verglasung in einer Ebene angeordnet wird, die zu der des Prüfbildes parallel ist.

4. Verfahren nach einem der Ansprüche 1 bis 3, **dadurch gekennzeichnet, daß** die Lichtstärke der Abbildung des durch die Verglasung betrachteten Prüfbildes von einem Abtast-Lichtdetektor gemessen wird.

5. Verfahren nach einem der Ansprüche 1 bis 4, **dadurch gekennzeichnet, daß** der geprüfte Teil der zentrale Teil der Verglasung ist.

6. Verfahren nach Anspruch 5, **dadurch gekennzeichnet, daß** wenigstens die Transparenz eines Drittels der Verglasung geprüft wird.

7. Verfahren nach einem der Ansprüche 1 bis 6, **dadurch gekennzeichnet, daß** der geprüfte Teil der Verglasung die gesamte Verglasung mit Ausnahme der Ränder mit einer Breite von höchstens 10 cm ist.

8. Verfahren nach Anspruch 7, **dadurch gekennzeichnet, daß** die Verbundverglasung aus wenigstens zwei Glasscheiben und einer Polyvinylbutyral-Zwischenfolie gebildet ist.

9. Verfahren nach einem der Ansprüche 2 bis 8, **dadurch gekennzeichnet, daß** das Prüfbild aus abwechselnd dunklen und hellen Streifen besteht.

10. Verfahren zur Kontrolle des Arbeitsgangs des vorläufigen Verbindens einer Verbundverglasung, insbesondere wenn in ihm Wärme und Vakuum zusammen angewendet werden, um die verschiedenen Elemente, welche die Verbundverglasung bilden, miteinander zu verbinden, **dadurch gekennzeichnet, daß** die Transparenz wenigstens eines Teils der vorläufig verbundenen Verglasung gemäß einem der Ansprüche 1 bis 9 geprüft wird.

11. Verfahren nach Anspruch 10, **dadurch gekennzeichnet, daß** es außer den Kontrollarbeitsgängen Arbeitsgänge umfaßt, die es ermöglichen, in das Verfahren zum Verbinden der Verbundverglasung einzugreifen.

12. Vorrichtung zum Prüfen der Transparenz einer Verglasung, **dadurch gekennzeichnet, daß** sie ein Prüfbild (4), eine Lichtquelle (5), einen Abtast-Lichtdetektor (6) und Mittel zum Messen der Lichtstärke der Abbildung des durch die Verglasung betrachteten Prüfbildes, um diese Stärke zu mitteln und mit einem theoretischen Wert zu vergleichen, umfaßt.

13. Vorrichtung nach Anspruch 12, **dadurch gekennzeichnet, daß** der Abtast-Lichtdetektor eine Matrixkamera ist.

14. Vorrichtung nach Anspruch 12 oder 13, **dadurch gekennzeichnet, daß** die Mittel, um die Lichtstärke zu messen, zu mitteln und mit einem theoretischen Wert zu vergleichen, einen Rechner umfassen.

15. Vorrichtung nach Anspruch 14, **dadurch gekennzeichnet, daß** das analoge Signal der Lichtstärke jedes Punktes der Abbildung des durch die Verglasung betrachteten Prüfbildes digitalisiert wird.

16. Vorrichtung nach einem der Ansprüche 12 bis 15, **dadurch gekennzeichnet, daß** sie Mittel umfaßt, um das Prüfbild von hinten zu beleuchten.

17. Vorrichtung nach einem der Ansprüche 12 bis 16, **dadurch gekennzeichnet, daß** das Prüfbild aus abwechselnd dunklen und hellen Streifen besteht.

18. Vorrichtung nach Anspruch 17, **dadurch gekennzeichnet, daß** das Prüfbild aus Streifen besteht, die zur Symmetrieachse der Verglasung parallel sind.

19. Vorrichtung nach einem der Ansprüche 12 bis 18, **dadurch gekennzeichnet, daß** sie mit Mitteln verbunden ist, welche während des Arbeitsgangs des vorläufigen Verbindens Unregelmäßigkeiten auffinden und dort beseitigen können.

## Claims

1. Method of monitoring the transparency of at least a portion of a preassembled laminated pane (3) by analysis of the luminous intensity of the image of a test pattern (4) viewed through said portion of the pane, in which the test pattern is illuminated by a light source (5) and the luminous intensity, picked up by a detector, of each point of the image of the test pattern viewed through the pane is quantified by a number, the numbers obtained for the points of one same image being afterwards averaged, the average obtained being compared with a previously fixed theoretical value.

2. Method of monitoring the transparency of a laminated pane according to Claim 1, characterized in that the pane is constituted of at least one glass sheet and one sheet of plastics material, the transparency of the plastics sheet developing during the course of the assembling operation, which itself comprises a preassembling and a final assembling.

3. Method according to one of Claims 1 and 2, in which the pane is disposed in a plane parallel to that of the test pattern.

4. Method according to one of Claims 1 to 3, characterized in that the luminous intensity of the image of the test pattern viewed through the pane is picked up by a scanning light detector.

5. Method according to one of Claims 1 to 4, characterized in that said portion monitored is the central part of the pane.

6. Method according to Claim 5, characterized in that the transparency of at least one-third of the pane is monitored.

7. Method according to one of Claims 1 to 6, characterized in that the monitored portion of the pane is the totality of the pane, with the exception of the edges of a width less than or equal to 10 cm.

8. Method according to Claim 7, characterized in that the laminated pane is formed of at least two glass sheets and one intermediate sheet of polyvinyl butyral.

9. Method according to one of Claims 2 to 8, characterized in that the test pattern is constitued of alternately dark and light bands.

10. Method of monitoring the preliminary assembling operation of a laminated pane, notably where this operation combines heating and vacuum for the purpose of joining together the various elements constituting said laminated pane, characterized in that the transparency of at least a portion of the preassembled pane is monitored according to one of Claims 1 to 9.

11. Method according to Claim 10, characterized in that the method comprises, in addition to the monitoring operations, operations enabling interventions to be made into the process of assembling the laminated pane.

12. Device for monitoring the transparency of a pane, characterized in that it comprises a test pattern (4), a light source (5), a scanning light detector (6) and means for analysing the luminous intensity of the image of the test pattern through the pane, for averaging this intensity and comparing it with a theoretical value.

13. Device according to Claim 12, characterized in that the scanning light detector is a matrix camera.

14. Device according to one of Claims 12 or 13, characterized in that the means for analysing the luminous intensity, averaging it and comparing it with a theoretical value, comprise a computer.

15. Device according to Claim 14, characterized in that the analogue signal of the luminous intensity of each point of the image of the test pattern viewed through the pane is digitized.

16. Device according to one of Claims 12 to 15, characterized in that it comprises means for illuminating the test pattern from behind.

17. Device according to one of Claims 12 to 16, characterized in that the test pattern is composed of alternately dark and light bands.

18. Device according to Claim 17, characterized in that the test pattern is composed of bands parallel to the axis of symmetry of the pane.

19. Device according to one of Claims 12 to 18, characterized in that it is connected to means enabling the anomalies to be analysed during the operation of preassembling and to be remedied then.
